# FASCICULE DE BREVET EUROPEEN

(11) **EP 0 388 675 B1**
(45) Date de publication et mention de la délivrance du brevet: **01.09.1993**
(21) Numéro de dépôt: 90103954.5
(22) Date de dépôt: 01.03.1990
(51) Int. Cl.: A61C 5/02

(54) **Instrument pour le traitement des canaux dentaires**
Zahnwurzelbearbeitungsinstrument
Instrument for treating root canals

(30) Priorité: 21.03.1989 CH 1029/89
(43) Date de publication de la demande: 26.09.1990
(73) Titulaire: LES FILS D'AUGUSTE MAILLEFER SOCIETE ANONYME A BALLAIGUES, CH-1338 Ballaigues (CH)
(72) Inventeur: Katz, Larry, Valley Stream, New York 11581 (US); Maillefer, Michel, CH-1338 Ballaigues (CH); Maillefer, Pierre-Luc, CH-1338 Ballaigues (CH)
(74) Mandataire: Robert, Jean S.

(56) Documents cités:
- US-A- 4 299 571

## Description

La présente invention a pour objet un instrument pour le traitement des canaux dentaires, formé d'une tige effilée.

Le traitement d'un canal radiculaire dentaire commence par l'extraction du nerf puis est suivi par l'alésage du canal. Cet alésage s'effectue notamment au moyen de forets, de broches et de limes, utilisés les uns à la main, les autres au moyen de pièces à main à mouvement rotatif ou à mouvement de va-et-vient ou encore à mouvement vibratoire. L'alésage du canal ne se fait pas avec un seul instrument mais par l'usage successif de plusieurs broches ou limes en commençant par la plus fine pour se terminer par la plus forte.

L'alésage des canaux radiculaires incurvés ou courbes pose parfois problème en ce sens que l'instrument a tendance à se planter dans la paroi du canal se trouvant à l'extérieur de la courbe au lieu de suivre celle-ci jusqu'à l'extrémité de la racine dentaire (apex). En outre, même s'il suit le canal jusqu'à son extrémité, l'instrument a tendance à agir plus fortement sur la paroi se trouvant à l'extérieur de la courbe ou à y créer des épaulements qui rendront plus difficile l'introduction des instruments suivants jusqu'à l'extrémité de la racine, puis l'obturation du canal par des pointes de gutta-percha ou du ciment.

Ce problème n'a été que partiellement résolu par l'utilisation d'instruments très flexibles, tel l'instrument décrit et représenté dans le brevet USA No 4.299.571, ou d'instruments à pointe arrondie, non coupante, lisse ou aplatie, de même que par le pré-courbage des instruments.

Cependant, la flexibilité de l'instrument ne permet pas toujours d'éviter que celui-ci ne se plante dans la paroi canalaire ni qu'il ne déforme le canal en alésant plus fortement la paroi extérieure de la courbe. Quant aux instruments à pointe arrondie, aplatie et lisse, ils ne sont pas faciles à réaliser dans la pratique, surtout lorsqu'il s'agit d'instruments très fins.

Le but de la présente invention est de fournir un instrument pour le traitement des canaux dentaires qui ne présente pas ces inconvénients.

Ce but est atteint grâce aux moyens définis dans la revendication 1.

Le dessin représente, à titre d'exemple, une forme d'exécution de l'objet de l'invention.
La fig. 1 est une vue en élévation d'une lime pour le traitement des canaux dentaires, et
La fig. 2 est une coupe de l'extrémité de cette lime, à échelle fortement agrandie.

La lime représentée comprend une tige effilée 1, enchassée dans un manche 2, présentant à sa naissance une partie lisse 1a suivie d'une partie coupante 1b. La pointe de cette tige est revêtue en 3 d'une couche de matière anti-friction dont l'épaisseur se situera entre quelques microns et 100 microns, et qui s'étendra sur une longueur variant de 0,5 à 3 mm.

Le faible coefficient de frottement de la couche anti-friction 3 et le fait que cette couche rend l'extrémité de l'instrument non coupante et non abrasive a l'avantage de permettre la pénétration de l'instrument dans les canaux radiculaires dentaires même si ceux-ci sont courbes sans que l'instrument ne blesse la paroi du canal ou n'exerce sur celle-ci une action plus marquée sur l'extérieur de la courbe que sur l'intérieur.

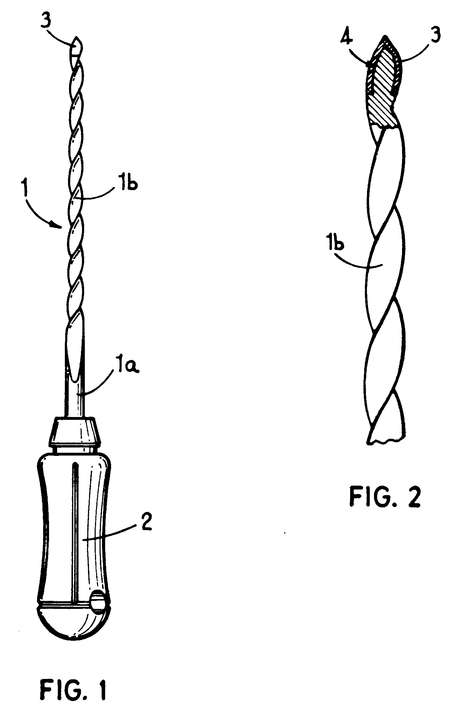

Quand bien même la couche de matière anti-friction 3 est très mince, l'extrémité de la tige 1 présente un dégagement annulaire 4 (fig. 2), dont la profondeur, qui a été fortement exagérée au dessin, correspond à l'épaisseur de la couche de matière anti-friction, dans lequel est logée cette dernière. Ainsi, la surface extérieure de l'instrument ne présente pas d'épaulement annulaire au droit de l'extrémité de la couche de revêtement 3.

La matière anti-friction utilisée pourra être constituée par un revêtement autolubrifiant tel qu'un vernis époxy à deux composants avec inclusion de particules autolubrifiantes, par exemple huileuses, ou un dépôt de film plastique tel que du polytétrafluoréthylène (PTFE). Elle pourra également être constituée par un dépôt chimique, de nickel phosphoreux (NiP) par exemple, ou par un dépôt ionique (vecteur par plasma de gaz neutre) tel que du nitrure de titane (TiN), du carbure de titane (TiC), de l'oxyde de zirconium (ZᵣO₂) ou une biocéramique formée par exemple d'oxyde de zirconium et d'oxyde d'yttrium (ZᵣO₂/Y₂O₃) .

L'invention n'est pas limitée à des limes mais s'appliquera à tous les intruments pour le traitement des canaux dentaires tels que forets, broches ou autres actionnés à la main ou par un moteur.

## Revendications

1. Instrument pour le traitement des canaux dentaires, formé d'une tige effilée, caractérisé par le fait que l'extrémité de ladite tige (1) est revêtue d'une couche (3) de matière anti-friction.

2. Instrument suivant la revendication 1, caractérisé par le fait que son extrémité présente un dégagement annulaire (4) dont la profondeur correspond à l'épaisseur de ladite couche (3) de revêtement, et qui est occupé par celle-ci.

3. Instrument suivant la revendication 1, caractérisé par le fait que l'épaisseur de ladite couche (3) de revêtement est inférieure ou égale à 100 microns.

4. Instrument suivant la revendication 1, caractérisé par le fait que ladite couche (3) de revêtement s'étend sur une longueur variant de quelques dixièmes de mm à 3 mm.

5. Instrument suivant la revendication 1, caractérisé par le fait que ladite couche (3) de revêtement est faite d'une matière autolubrifiante.

6. Instrument suivant la revendication 5, caractérisé par le fait que ladite couche (3) de revêtement est faite d'un vernis époxy incluant des particules autolubrifiantes.

7. Instrument suivant la revendication 1, caractérisé par le fait que ladite couche (3) de revêtement est constituée par un film plastique.

8. Instrument suivant la revendication 7, caractérisé par le fait que ladite couche (3) de revêtement est constituée par un film de polytétrafluoréthylène.

9. Instrument suivant la revendication 1, caractérisé par le fait que ladite couche (3) de revêtement est constituée par un dépôt chimique.

10. Instrument suivant la revendication 1, caractérisé par le fait que ladite couche (3) de revêtement est constituée par un dépôt ionique.

## Claims

1. Instrument for treating root canals, made of a tapered stem, characterized by the fact that the end of the said stem (1) is coated with a layer (3) of anti-friction material.

2. Instrument as claimed in claim 1, characterized by the fact that its end is provided with an annular recess (4) the depth of which corresponds to the thickness of said coating layer (3) and which is occupied by this latter.

3. Instrument as claimed in claim 1, characterized by the fact that the thickness of said coating layer (3) is less than or equal to 100 microns.

4. Instrument as claimed in claim 1, characterized by the fact that said coating layer (3) extends over a length varying from some. tenths of a millimeter to 3.0 mm.

5. Instrument as claimed in claim 1, characterized by the fact that said coating layer (3) is made of a self-lubricating material.

6. Instrument as claimed in claim 5, characterized by the fact that said coating layer (3) is made of an epoxy lacquer including self-lubricating particles.

7. Instrument as claimed in claim 1, characterized by the fact that said coating layer (3) is constituted by a plastic film.

8. Instrument as claimed in claim 7, characterized by the fact that said coating layer (3) is constituted by a film of polytetrafluorethylene.

9. Instrument as claimed in claim 1, characterized by the fact that said coating layer (3) is constituted by a chemical coating.

10. Instrument as claimed in claim 1, characterized by the fact that said coating layer (3) is constituted by an ionic coating.

## Patentansprüche

1. Instrument zur Behandlung von Zahnkanälen, das aus einer mit Spitze versehenen Spindel gebildet ist, dadurch gekennzeichnet, daß das Ende der genannten Spindel (1) mit einer Schicht aus einem reibungsarmen Material abgedeckt ist.

2. Instrument nach Anspruch 1, dadurch gekennzeichnet, daß sein Ende eine ringförmige Ausnehmung (4) aufweist, deren Tiefe der Dicke der genannten Schicht (3) der Abdeckung entspricht und die von dieser ausgefüllt ist.

3. Instrument nach Anspruch 1, dadurch gekennzeichnet, daß die Dicke der genannten Schicht (3) der Abdeckung weniger oder gleich 100 µm ist.

4. Instrument nach Anspruch 1, dadurch gekennzeichnet, daß die genannte Schicht (3) der Abdeckung sich über eine Länge erstreckt, die von einigen Zehntel mm bis 3 mm veränderlich ist.

5. Instrument nach Anspruch 1, dadurch gekennzeichnet, daß die genannte Schicht (3) der Abdeckung aus einem Material mit Selbstschmierungseigenschaften hergestellt ist.

6. Instrument nach Anspruch 5, dadurch gekennzeichnet, daß die genannte Schicht (3) der Abdeckung aus einem Epoxyharz hergestellt ist, das Partikel mit selbstschmierenden Eigenschaften enthält.

7. Instrument nach Anspruch 1, dadurch gekennzeichnet, daß die genannte Schicht (3) der Abdeckung von einem Kunststoffilm gebildet ist.

8. Instrument nach Anspruch 7, dadurch gekennzeichnet, daß die genannte Schicht (3) der Abdeckung von einer Filmschicht aus Polytetrafluoräthylen gebildet ist.

9. Instrument nach Anspruch 1, dadurch gekennzeichnet, daß die genannte Schicht (3) der Abdeckung von einer chemischen Ablagerung gebildet ist.

10. Instrument nach Anspruch 1, dadurch gekennzeichnet, daß die genannte Schicht (3) der Abdeckung durch Ionenablagerung gebildet ist.
